# EUROPÄISCHE PATENTSCHRIFT

(11) **EP 2 092 732 B1**
(45) Veröffentlichungstag und Bekanntmachung des Hinweises auf die Patenterteilung: **14.03.2012**
(21) Anmeldenummer: 07847755.1
(22) Anmeldetag: 04.12.2007
(51) Int. Cl.: H04N 5/217

(54) **BESTIMMEN DES FIXED PATTERN NOISE WÄHREND DES KAMERABETRIEBS**
DETERMINATION OF THE FIXED PATTERN NOISE DURING THE OPERATION OF A CAMERA
DÉTERMINATION DU FIXED PATTERN NOISE PENDANT LE FONCTIONNEMENT D'UNE CAMÉRA

(30) Priorität: 19.12.2006 DE 102006060001
(43) Veröffentlichungstag der Anmeldung: 26.08.2009
(73) Patentinhaber: Continental Automotive GmbH, 30165 Hannover (DE)
(72) Erfinder: FISCHER, Marc, 88149 Nonnenhorn (DE); WIEDEMANN, Christoph, 88142 Wasserburg (Bodensee) (DE)
(86) Internationale Anmeldenummer: PCT/EP2007/063251
(87) Internationale Veröffentlichungsnummer: WO 2008/074629

(56) Entgegenhaltungen:
- EP-A- 1 601 185
- WO-A-2004/021696
- US-A- 5 926 216

## Beschreibung

Die Erfindung betrifft die Ermittlung einer feststehenden Störstruktur, die sich den mit einem Bildwandler aufgenommenen Bildern überlagert.

Digitale Bildwandler dienen der automatisierten Umwandlung eines optischen Bildes in digitale Bilddaten, die das optische Bild repräsentieren. Entsprechende Bildwandler werden häufig auch als Bildsensoren bezeichnet. Da die Wandlungseigenschaften üblicher Bildsensoren in der Regel nicht ideal sind, weisen die in den digitalen Bilddaten repräsentierten Bilder im Allgemeinen Abweichungen von den ihnen zugrunde liegenden optischen Bildern auf. Diese Abweichungen werden als Bildfehler bezeichnet.

Abweichungen in den Eigenschaften der Sensoren für einzelne Bildpunkte sind meist die Ursache für das so genannte "Fixed Pattern Noise", einer feststehenden Störstruktur, die sich motivunabhängig allen mit dem jeweiligen Bildsensor erzeugten Bilddaten überlagert und dadurch eventuell nachfolgende Bildverarbeitungsverfahren beeinträchtigen kann. Eine Verbesserung der Bildqualität kann daher durch Subtrahieren des Fixed Pattern Noise von den digitalen Bilddaten, ähnlich einem Fremd- oder Referenzbild, erreicht werden.

Hierzu muss das Fixed Pattern Noise des jeweiligen Bildwandlers jedoch bekannt sein. Gegenwärtig wird, um das Fixed Pattern Noise eines Bildwandlers zu ermitteln, mit diesem ein Dunkelbild aufgezeichnet, dessen Bilddaten das Fixed Pattern Noise und einen für alle Bildelementsensoren des Bildwandlers konstanten Offset enthalten. Der Offset entspricht dem Mittelwert über alle Bildelementwerte. Aus den Bilddaten des, vorzugsweise bei hoher Verstärkungseinstellung des Bildwandlers aufgenommenen Dunkelbilds können schließlich die Korrekturwerte für die digitalen Bilddaten ermittelt werden. Gegenwärtig wird die Ermittlung des Fixed Pattern Noise gegen Ende des Bildwandlerherstellungsprozesses als zusätzlicher Fertigungsschritt durchgeführt. Zum einen bedarf dabei einer lichtdichten Abdeckung der photosensitiven Oberfläche des Bildwandlers und zum anderen müssen die auf dem Fixed Pattern Noise beruhenden Korrekturwerte in einem dem Bildwandler zugeordneten Datenspeicher zugänglich aufbewahrt werden, wenn eine Bilddatenkorrektur bei Betrieb des Bildsensors möglich sein soll. Die separate Bestimmung des Fixed Pattern Noise vor einer Inbetriebnahme des Bildwandlers bedeutet zusätzliche Kosten verbunden mit einem erhöhten logistischen Aufwand.

In der internationalen Patentanmeldung WO 2004/021696 A1 wird ein Verfahren zur Reduktion des Fixed Pattern Noise (FNP) Anteils in Bildern vorgestellt, die mit einem Bildsensor aufgenommen wurden (sogenannte Ur-Bilder). Für die Bestimmung des FNP werden drei Verfahren erläutert.

Im ersten Verfahren wird der Bildsensor in einer Ulbrichtkugel verschieden starken, aber homogenen (d.h. ohne lokale Variationen) Beleuchtungsstärken ausgesetzt. Für jede der Beleuchtungsstärken werden die Grauwerte der einzelnen Bildsensorelemente ermittelt. Die Grauwerte aller Bildsensorelemente bei einer der Beleuchtungsstärken bilden ein Korrekturmuster. Die bei unterschiedlichen Beleuchtungsstärken aufgenommenen Korrekturmuster bilden zusammen ein sogenanntes Korrekturmuster-Feld. Zur helligkeitsadaptiven FNP-Korrektur eines mit dem Bildsensor aufgenommenen Ur-Bilds wird aus dem Korrekturmuster-Feld ein synthetisches Korrekturmuster ermittelt, das den Helligkeitswerten (Grauwerten) der einzelnen Bildpunkte des Ur-Bilds angepasst ist.

Für das zweite Verfahren wird angenommen, dass jedes Element des Bildsensors denselben Kennlinientyp aufweist, sich die Kennlinien der einzelnen Bildsensorelemente aber in ihrer Parametrisierung voneinander unterscheiden. Die Bestimmung der einzelnen Kennlinienparameter erfolgt aus dem wie oben beschrieben erzeugten Korrekturmuster-Feld, wobei zur Einsparung von Speicherplatz anschließend nur die Parameter abgespeichert werden.

Beim dritten Verfahren wird statt der messtechnischen Ermittlung eines Korrekturmuster-Feldes in einem separaten Kalibrierungsvorgang eine bildsensorelementweise zeitliche Mittelung von N zeitlich zurückliegenden Kamerabildern verwendet. Es kann auch ein zeitlicher Tiefpass (Filterung erfolgt pro Bildsensorelement) verwendet werden. Vom Ergebnisbild der zeitlichen Filterung wird der räumliche Mittelwert subtrahiert (oder es wird ein räumlicher Hochpass verwendet) und als synthetisches Korrekturmuster verwendet. Die helligkeitsadaptive Bildkorrektur wird dann mit diesem synthetischen Korrekturmuster durchgeführt. Durch Auswertung vieler zeitlich zurückliegender und gespeicherter synthetischer Korrekturmuster kann ein Korrekturmusterfeld bestimmt werden.

In der Patentschrift US 5,926,216 wird eine Bildaufzeichnungsvorrichtung offenbart, bei der ein verbessertes Signalzu-Rausch-Verhältnis erzielt wird. Die Verbesserung wird erzielt, indem jeweils vier Bilder hintereinander aufgezeichnet und anschließend addiert, d.h. praktisch integriert werden. Zur Verbesserung des Ergebnisses wird die Position des optischen Bildes auf dem Bildsensor zwischen den vier Folgeaufnahmen verschoben. In einer der beschriebenen Ausführungsformen wird diese Integration mehrerer Bildaufzeichnungen zu einem Summenbild dann angewandt, wenn die Luminanz des vom Bildsensor gewandelten optischen Bildes unterhalb eines Schwellwerts fällt.

In der Offenlegungsschrift EP 1 601 185 A2 wird eine elektronische Kamera offenbart, bei der ein Dunkelbild zur Bestimmung des FNP aufgezeichnet wird. Zum Aufnehmen des Dunkelbilds wird die Kamera mit geschlossenem Verschluss betrieben. Da sich die Bilddaten des so erzeugten Dunkelbildes aus drei Komponenten zusammensetzen, nämlich FNP, weißes Rauschen und Dunkelstromoffset, werden die dem Dunkelstrom und dem weißen Rausch zuzuordnenden Anteile zuerst bestimmt. Der Dunkelstromanteil ergibt sich aus dem Mittelwert der Pixelwerte unterhalb eines bestimmten Schwellwerts, der vorgegeben sein oder über Glättung ermittelt werden kann. Nach Abzug des Dunkelstromanteils werden nur die Werte oberhalb eines weiteren Schwellwerts zur Bestimmung des FNP verwendet.

Ausgehend hiervon liegt der Erfindung daher die Aufgabe zugrunde, ein Verfahren und eine Vorrichtung anzugeben, die eine automatische Bestimmung des Fixed Pattern Noise eines Bildwandlers während dessen Betrieb und ohne großen technischen Aufwand ermöglichen.

Die Aufgabe wird gemäß den unabhängigen Ansprüchen der Erfindung gelöst.

Die Erfindung umfasst ein Verfahren zur Bestimmung des Fixed Pattern Noise eines Bildwandlers, wobei das Verfahren Schritte aufweist zum Wandeln eines ersten optischen Bildes in digitale Bilddaten unter Verwendung des Bildwandlers, zum Bestimmen der Lichtmenge des ersten optischen Bildes, zum Vergleichen der bestimmten Lichtmenge des ersten optischen Bildes mit einem Schwellwert, zum Umstellen der Bildwandlereigenschaften des Bildwandlers auf eine Dunkelbildeinstellung so, dass die bei einer gleichmäßigen Verteilung der bestimmten Lichtmenge über die photosensitive Bildfläche des Bildwandlers erzeugten Bilddaten keinen von der Lichtmenge bewirkten Anteil aufweisen, und zum Aufzeichnen eines ersten Dunkelbilds mit der zuvor eingestellten Dunkelbildeinstellung.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalischen Abwandlungen, generell das Vorhandensein von Merkmalen, wie z.B. Verfahrensschritten, Einrichtungen, Bereichen, Größen und dergleichen mehr angeben, jedoch in keiner Weise das Vorhandensein anderer oder zusätzlicher Merkmale oder Gruppierungen von anderen oder zusätzlichen Merkmalen ausschließen.

Die Erfindung beinhaltet ferner eine Vorrichtung zur Bestimmung des Fixed Pattern Noise eines Bildwandlers, der zur Wandlung eines optischen Bildes in digitale Bilddaten ausgebildet ist. Die Vorrichtung umfasst eine Bildaufnahme-Steuereinrichtung zur Steuerung des Bildwandlers, eine Bildverarbeitungseinrichtung zur Verarbeitung der von dem Bildwandler erzeugten digitalen Bilddaten und eine Bilddatenspeichereinrichtung zur Speicherung von digitalen Bilddaten. Die Bildverarbeitungseinrichtung ist hierbei ausgebildet, die in einem optischen Bild enthaltene Lichtmenge aus den zugehörigen digitalen Bilddaten zu ermitteln. Die Bildaufnahme-Steuereinrichtung ist dazu ausgebildet, die Einstellung des Bildwandlers so zu steuern, dass die bei einer gleichmäßigen Verteilung der bestimmten Lichtmenge über die photosensitive Bildfläche des Bildwandlers erzeugten Bilddaten keinen von der Lichtmenge bewirkten Anteil aufweisen, wenn die von der Bildverarbeitungseinrichtung ermittelte Lichtmenge kleiner oder gleich einem Schwellwert ist.

Die Erfindung umfasst schließlich ein Computerprogrammprodukt zur Bestimmung des Fixed Pattern Noise eines Bildwandlers, wobei das Computerprogrammprodukt eine Reihe physikalisch unterscheidbarer Zustände aufweist, die durch eine Datenverarbeitungseinrichtung lesbar und ausführbar sind und eine Abfolge von Instruktionen darstellen, die auf der Datenverarbeitungsanlage ausgeführt, ein dem erfindungsgemäßen Verfahren entsprechendes Verfahren durchführen und auf der Datenverarbeitungsanlage eine erfindungsgemäße Vorrichtung einrichten.

Die Erfindung ermöglicht die Bestimmung des Fixed Pattern Noise eines Bildwandlers während dessen bestimmungsgemäßen Gebrauchs. Eine der Verwendung des Bildwandlers vorangehende aufwändige Bestimmung des Fixed Pattern Noise und dessen Weitergabe für die Verbesserung der Bildqualität von Bildwandlersystemen, die den Bildwandler verwenden, kann somit entfallen. Dies bedeutet eine erhebliche Einsparung in der Massenfertigung von Bildwandlersystemen.

Die Erfindung wird in ihren abhängigen Ansprüchen weitergebildet.

Um negative Einflüsse großer Helligkeitsunterschiede in dem optischen Bild zu minimieren und ein dem idealen Dunkelbild entsprechendes Dunkelbild zu erhalten, wird zumindest ein weiteres Dunkelbild analog dem ersten Dunkelbild aufgezeichnet und die digitalen Bilddaten der Bildelemente des ersten Dunkelbilds werden durch die digitalen Bilddaten der den jeweiligen Bildelementen des ersten Dunkelbilds entsprechenden Bildelemente des weiteren Dunkelbilds ersetzt, wenn letztere einen niedrigeren Wert aufweisen.

Damit sich eventuelle Helligkeitskonzentrationen nicht immer an denselben Stellen des optischen Bildes befinden, unterscheidet sich das Motiv des dem ersten Dunkelbild zugrunde liegenden optischen Bildes zweckmäßig von dem Motiv des dem zumindest weiteren Dunkelbild zugrunde liegenden optischen Bildes.

Eine bessere Statistik der Verteilung der Helligkeitsunterschiede in den weiteren Dunkelbildern kann erzielt werden, wenn sich das Motiv des einem ersten weiteren Dunkelbild zugrunde liegenden optischen Bildes jeweils von dem Motiv des einem anderen weiteren Dunkelbild zugrunde liegenden optischen Bildes unterscheidet.

Die von dem Fixed Pattern Noise des Bildwandlers bestimmte Störstruktur wird vorteilhaft aus dem Dunkelbild isoliert, indem der Mittelwert der digitalen Bilddaten des ersten Dunkelbilds bestimmt und von den digitalen Bilddaten des ersten Dunkelbilds subtrahiert wird.

Vorteilhaft sind Bildaufnahme-Steuereinrichtung, Bildverarbeitungseinrichtung und Bilddatenspeichereinrichtung der Vorrichtung zur Bestimmung des Fixed Pattern Noise so ausgebildet, dass sie die beschriebenen Verfahrensschritte ausführen.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen
- Figur 1: die grundlegenden Schritte eines Verfahrens zur Aufzeichnung eines Dunkelbilds während des Betriebs eines Bildwandlers zeigt, und
- Figur 2: das Blockschaltbild einer Vorrichtung zur Aufzeichnung eines Dunkelbilds zeigt.

Das Fixed Pattern Noise eines Bildwandlers kann aus einem Dunkelbild ermittelt werden, das mit dem Bildwandler aufgezeichnet wurde. Im Idealfall entspricht das Dunkelbild bereits dem, mit einem Offset überlagerten, Fixed Pattern Noise des Bildwandlers. Im Gegensatz zu einer Bestimmung des Fixed Pattern Noise im Werk bzw. außerhalb eines bestimmungsgemäßen Gebrauchs des Bildsensors kann der photosensitive Bereich des Bildwandlers im Normalbetrieb nicht lichtdicht abgedeckt werden. Daher wird das Dunkelbild während des Bildwandelbetriebs nur dann aufgezeichnet, wenn die auf den Bildwandler einfallende Lichtintensität einen vorgegebenen Wert unterschreitet. Die Aufzeichnung des Dunkelbilds selbst erfolgt dabei mit Einstellungen des Bildwandlers, die von dessen Normabetrieb abweichen.

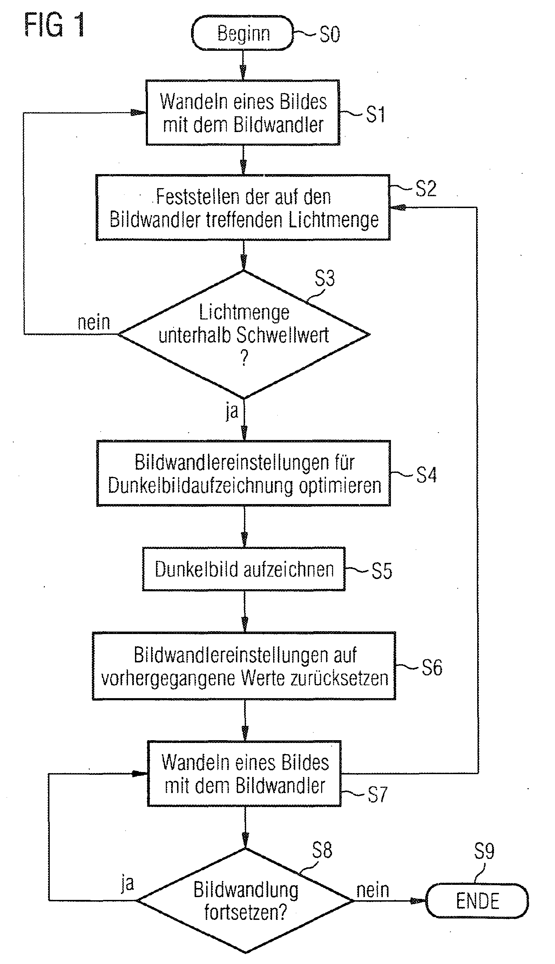

Dies ist in der Figur 1 veranschaulicht, worin die grundlegenden Schritte eines Verfahrens zur Aufzeichnung eines Dunkelbilds während des Bildwandlerbetriebs dargestellt sind. Nach dem Beginn des Verfahrens in Schritt S0 wird zunächst ein auf die photosensitive Fläche des Bildwandlers projiziertes optisches Bild in digitale Bilddaten umgewandelt. Die digitalen Bilddaten werden in der Folge auch als digitales Bild oder einfach auch nur als Bild bezeichnet. Die Bildwandlung in Schritt S1 erfolgt vorzugsweise mit an die Lichtsituation angepassten Bildwandlereinstellungen. Auf der Grundlage des in Schritt S1 erzeugten Bildes wird die in Form des optischen Bildes auf die lichtsensitive Fläche des Bildwandlers projizierte Lichtmenge bestimmt. Dies erfolgt unter Berücksichtung der - unter Umständen einstellbaren - Empfindlichkeitskennlinie des Bildwandlers und des zur Wandlung verwendeten Verstärkungsfaktors.

Im nachfolgenden Schritt S3 wird die dem Bild zugrunde liegende Lichtmenge mit einem Schwellwert verglichen. Liegt die bestimmte Lichtmenge oberhalb des Schwellwerts, so kann mit dem Bildwandler kein Dunkelbild aufgezeichnet werden und das Verfahren wird in Schritt S1 mit der Wandlung weiterer Bilder fortgeführt. Unterschreitet die Lichtmenge den vorgegebenen Schwellwert jedoch, so entsprechen die Lichtverhältnisse den Voraussetzungen für die nun in Schritt S4 vorbereitete Aufzeichnung eines Dunkelbilds.

Bevor die Aufzeichnung des Dunkelbilds vorgenommen wird, werden die Bildwandlereinstellungen in Schritt S4 für die Aufnahme des Dunkelbilds optimiert Die Optimierung der Einstellungen erfolgt unter Berücksichtigung der nachfolgenden Kriterien: hoher Verstärkungsfaktor bei möglichst geringer Lichtempfindlichkeit des Bildsensors und einer Einstellung des Offsets, die sicherstellt, dass sich alle Werte des Fixed Pattern Noise innerhalb des Wertebereichs der möglichen digitalen Bilddaten befinden. Die geringe Lichtempfindlichkeit wird in der Regel durch Wahl der geringsten Belichtungszeit eingestellt. Ihre Einstellung dient dazu, dass die mittels des Schwellwerts definierte Lichtmenge, die auf die photosensitive Fläche des Bildsensors trifft, noch kein Bildsignal bewirken kann. In Schritt S5 wird schließlich das Dunkelbild mit den in Schritt S4 vorgenommenen Einstellungen aufgezeichnet.

Nach dem Zurücksetzen der Bildwandlereinstellungen auf die Werte vor der Veränderung in Schritt S4, wird das Verfahren in Schritt S7 mit der Wandlung eines auf den Bildsensor projizierten optischen Bildes weitergeführt. In Schritt S8 wird überprüft, ob die Bildwandlung fortgesetzt oder beendet werden soll. Im ersteren Fall kehrt das Verfahren zu Schritt S7 zurück, im anderen Fall wird das Verfahren in Schritt S9 beendet.

Im Idealfall, d.h. wenn die höchstens dem Schwellwert entsprechende Lichtmenge gleichmäßig über die photosensitive Bildfläche des Bildwandlers verteilt ist, entspricht das nach dem obigen Verfahren bestimmte Dunkelbild bereits dem mit einem Offset überlagerten Fixed Pattern Noise, wobei der Offset dem aus den Werten aller Bildelemente gebildeten Mittelwert entspricht. In der Realität kann es jedoch zu signifikanten Abweichungen vom Idealfall kommen, beispielsweise, wenn das in Schritt S1 gewandelte Bild extreme Unterschiede in den Helligkeits- bzw. Grauwerten der einzelnen Bildelemente aufweist. Dann kann es sein, dass auch wenn die in Schritt S2 bestimmte Lichtmenge unter den Schwellwert von Schritt S3 fällt, die lokal ungleichmäßige Lichtverteilung bei einigen Bildelementsensoren doch zu einem lichtbedingten Signalanteil in Schritt S5 führt. Mit anderen Worten wird die in Schritt S3 festgesetzte Schwelle von einigen Bildelementsensoren überschritten, so dass das während der Dunkelbildaufzeichnung aktuelle optische Bild sich dem Fixed Pattern Noise zu einem geringen Anteil überlagert.

Um dennoch zu einer zuverlässigen Bestimmung des Fixed Pattern Noise zu gelangen, werden die Schritte S2 bis S7 mehrmals wiederholt, so dass Anzahl unabhängig voneinander erstellter Dunkelbilder aufgezeichnet wird. Ist der Wert eines Bildelements in einem nachfolgend aufgezeichneten Dunkelbild geringer als in dem zur Bestimmung des Fixed Pattern Noise verwendeten Referenzdunkelbild, so wird der Wert des Bildelements in dem Referenzdunkelbild durch den niedrigeren des nachfolgend aufgezeichneten Dunkelbilds ersetzt. Mit zunehmender Anzahl von Dunkelbildern können die Abweichungen des Referenzdunkelbilds vom idealen Dunkelbild, d.h. dem offsetbehafteten Fixed Pattern Noise, somit minimiert werden.

In einer weiteren vorteilhaften Ausführungsform der Erfindung erfolgt die Minimierung der Abweichungen des Referenzdunkelbilds vom idealen Dunkelbild durch Aufzeichnung einer Anzahl von Dunkelbildern auf der Grundlage unterschiedlicher Bildszenen bei der Bildwandlung in Schritt S1.

Unterschiedliche Bildszenen können beispielsweise garantiert werden, wenn sich der Bildwandler relativ zu seiner Umgebung bewegt. Beim Einsatz in Kraftfahrzeugen ist dies im Allgemeinen über die Bewegung des Fahrzeugs selbst feststellbar. Es können jedoch auch einfache Signale, wie z.B. die Aktivierung des Zündschlosses, verwendet werden, woraufhin das in Figur 1 skizzierte Verfahren mit einer Mindestverzögerung oder einer willkürlich variierenden Wartezeit ausgenommen wird. Sind Verfahren zur Bildauswertung verfügbar, kann die Verschiedenheit der Szenen auch mittels einer Korrelation der in Schritt 1 jeweils vor einer Dunkelbildaufzeichnung umgewandelten Bilder geprüft werden.

Um die durch das Fixed Pattern Noise definierte feststehende Störstruktur genauer bestimmen zu können, werden fehlerhafte Bildelementsensoren wie z.B. Hotpixel (weisen eine nichtproportionale Wandlung von Licht auf und erscheinen bei langen Belichtungszeiten daher heller) oder Darkpixel (Pixel mit verringerter Empfindlichkeit) bei der Ermittlung des Referenzdunkelbilds nicht berücksichtigt.

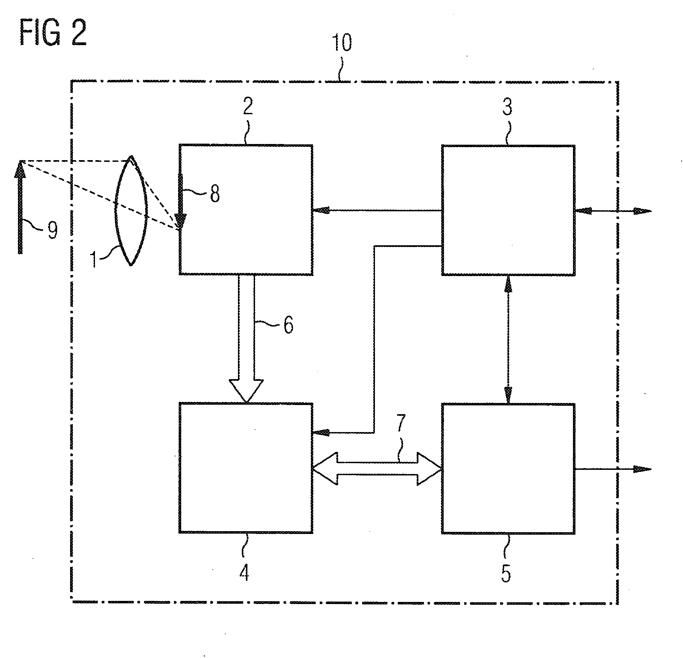

In der Figur 2 ist das Blockschaltbild einer Vorrichtung 10 zur Aufzeichnung von Referenzdunkelbildern dargestellt. Die Vorrichtung umfasst eine Optik, 1 die wie angedeutet ein optisches Bild 8 eines Motivs 9 bzw. einer Szene 9 auf die photosensitive Fläche eines Bildwandlers 2 bzw. Bildsensors 2 projiziert. Der Bildwandler 2 wandelt das optische Bild 8 in digitale Bilddaten, die in Form eines Bilddatenstroms über eine Bildsignalleitung 6 an eine Bilddatenspeichereinrichtung 4 übertragen werden. Die Bilddaten können von der Bildverarbeitungseinrichtung 5 aus dem Bilddatenspeicher 4 über eine weitere Bildsignalleitung 7 abgerufen und weiterverarbeitet werden. Eine Speicherung verarbeiteter Bilddaten in der Bilddatenspeichereinrichtung 4 ist, wie in der Figur 2 angedeutet ist, möglich.

Alternativ kann der Bilddatenstrom auch direkt von dem Bildwandler 2 an die Bildverarbeitungseinrichtung 5 übertragen werden, wobei die eventuelle Zwischenspeicherung verarbeiteter Bilddaten in der Bilddatenspeichereinrichtung 4 möglich ist. Zur Vornahme der Einstellung des Bildwandlers sowie der Steuerung der Funktionsabläufe innerhalb der Vorrichtung 10 ist eine Bildaufnahme-Steuereinrichtung 3 vorgesehen. Die Bildaufnahme-Steuereinrichtung 3 weist eine Schnittstelle zum Datenaustausch mit anderen Einrichtungen außerhalb der Vorrichtung 10, beispielsweise Fahrassistenzsystemen eines Kraftfahrzeugs auf. Auch die Bildverarbeitungseinrichtung 5 kann Daten und Datenströme, wie beispielsweise Bilddatenströme mit Einrichtungen außerhalb der Vorrichtung 10 austauschen.

Die Darstellung der Figur 2 gibt eine rein funktionelle Gliederung der Vorrichtung 10 wieder. Insbesondere kann die Bildaufnahme-Steuereinrichtung 3 als Teil der Bildverarbeitungseinrichtung 5 ausgebildet sein, wobei letztere auch die Bilddatenspeichereinrichtung 4 mit umfassen kann. Die Vorrichtung 10 oder Teile davon können in anderen, in der Figur 2 nicht gezeigten Einrichtungen realisiert sein. Ferner sind in der Figur 2 nur diejenigen Einrichtungen dargestellt, die für das Verständnis der Erfindung wesentlich sind. Auf die Darstellung weiterer Einrichtungen, die für das Funktionieren der Vorrichtung wesentlich sind oder deren Funktionsumfang bestimmen, wurde im Hinblick auf eine kurze und übersichtliche Darstellung verzichtet. Dennoch sind diese Einrichtungen als vorhanden angenommen.

Zur Bestimmung eines Referenzdunkelbildes steuert die Bildaufnahme-Steuereinrichtung 3 den Bildwandler 2 entsprechend den Erfordernissen zur Durchführung eines der oben beschriebenen Verfahren. In der Bildverarbeitungseinrichtung 5 erfolgen die jeweilige Bestimmungen der einem Bild zugrunde liegenden Lichtmenge und der Vergleich mit dem Schwellwert. Letzterer kann alternativ auch mittels der Bildaufnahme-Steuereinrichtung 3 vorgenommen werden. Dunkelbildaufzeichnungen und insbesondere das Referenzdunkelbild werden in der Bilddatenspeichereinrichtung 4 gespeichert. Die Korrektur des Referenzdunkelbilds anhand nachfolgend aufgezeichneter Dunkelbilder wird von der Bildaufnahme-Steuereinrichtung 3 gesteuert in der Bildverarbeitungseinrichtung 5 vorgenommen. In der Bildverarbeitungseinrichtung 5 erfolgt auch die Korrektur der digitalen Bilddaten anhand des aus dem Referenzdunkelbild ermittelten Fixed Pattern Noise.

Die vorliegende Erfindung ermöglicht die Bestimmung des Fixed Pattern Noise eines Bildwandlers während dessen bestimmungsgemäßen Betriebs. Die Bestimmung des Fixed Pattern Noise erfolgt dabei über eine Dunkelbildaufzeichnung. Während dieser Aufzeichnung ist der Bildwandler nur einer geringen Lichtbestrahlung ausgesetzt und wird mit einer Einstellung betrieben, bei der ein überwiegender Teil der Bildelementsensoren nicht auf die einfallende Lichtintensität anspricht. Eventuell auftretende Fehler durch zu hohe lokale Lichteinstrahlungen werden durch Mehrfachmessungen in Verbindung mit der beschriebenen Minimumwert-Ersetzung minimiert bzw. korrigiert. Die Erfindung ermöglicht daher eine massenfertigungstaugliche Verwendung von Bildwandlern für Bildaufzeichnungsgeräte wie z.B. Kamerasystem in Kraftfahrzeugen, da keine bildwandlerspezifische Korrektur des Fixed Pattern Noise bei der Herstellung der Bildaufzeichnungsgeräte vorzunehmen ist.

### Bezugszeichenliste

- 1: Optik
- 2: Bildwandler
- 3: Bildaufnahme-Steuereinrichtung
- 4: Bilddaten-Speichereinrichtung
- 5: Bildverarbeitungseinrichtung
- 6: Bildsignalleitung
- 7: Bildsignalleitung
- 8: optisches Bild
- 9: Motiv
- 10: Vorrichtung zur Aufzeichnung von ReferenzDunkelbildern
- S1-S9: Verfahrensschritte

## Patentansprüche

1. Verfahren zur Aufzeichnung von Dunkelbilden zur Bestimmung des Fixed Pattern Noise eines Bildwandlers (2) während dessen bestimmungs gemäßen Betriebs mit Schritten zum
- Wandeln (S1) eines optischen Bildes (8) unter Verwendung des Bildwandlers (2) in digitale Bilddaten,
- Bestimmen (S2) der Lichtmenge des optischen Bildes (8) aus den digitalen Bilddaten,
- Vergleichen (S3) der bestimmten Lichtmenge des optischen Bildes (8) mit einem Schwellwert,
- Ändern (S4) der Einstellungen des Bildwandlers (2) auf eine Dunkelbildeinstellung nur, wenn die bestimmte Lichtmenge dem Schwellwert gleichkommt oder diesen unterschreitet, wobei die Dunkelbildeinstellung -
unter Berücksichtigung der Kriterien: eines hohen Verstärkungsfaktors bei möglichst geringer Lichtempfindlichkeit des Bildsensors und einer Offset-Einstellung, die sicherstellt, dass sich alle Werte des Fixed Pattern Noise innerhalb eines Wertebereichs der möglichen digitalen Bilddaten befinden
- so gewählt ist, dass die in dieser Dunkelbildeinstellung erzeugten Bilddaten im Falle einer homogenen Verteilung einer maximal dem Schwellwert entsprechenden Lichtmenge über der photosensitiven Bildfläche des Bildwandlers (2) keinen von der Lichtmenge bewirkten Anteil aufweisen,
- Aufzeichnen (S5) eines ersten Dunkelbilds mit dem Bildwandler (2) in der Dunkelbildeinstellung und
- einem anschließenden Zurücksetzen (S6) der Einstellungen des Bildwandlers (2) auf die Werte vor der Dunkelbildeinstellung.

2. Verfahren nach Anspruch 1,
**dadurch gekennzeichnet,**
**dass** zumindest ein weiteres Dunkelbild analog dem ersten Dunkelbild aufgezeichnet wird und die digitalen Bilddaten der Bildelemente des ersten Dunkelbilds durch die digitalen Bilddaten der den jeweiligen Bildelementen des ersten Dunkelbilds entsprechenden Bildelemente des weiteren Dunkelbilds ersetzt werden, wenn letztere einen niedrigeren Wert aufweisen.

3. Verfahren nach Anspruch 2,
**dadurch gekennzeichnet,**
**dass** sich das Motiv des dem ersten Dunkelbild zugrunde liegenden optischen Bildes von dem Motiv des dem zumindest weiteren Dunkelbild zugrunde liegenden optischen Bildes unterscheidet.

4. Verfahren nach Anspruch 3,
**dadurch gekennzeichnet,**
**dass** sich das Motiv des einem ersten weiteren Dunkelbild zugrunde liegenden optischen Bildes jeweils von dem Motiv des einem anderen weiteren Dunkelbild zugrunde liegenden optischen Bildes unterscheidet.

5. Verfahren nach einem der vorangehenden Ansprüche,
**dadurch gekennzeichnet,**
**dass** der Mittelwert der digitalen Bilddaten des ersten Dunkelbilds bestimmt und von den digitalen Bilddaten des ersten Dunkelbilds subtrahiert wird.

6. Vorrichtung zur Aufzeichnung von Dunkelbilderen zur Bestimmung des Fixed Pattern Noise eines Bildwandlers (2) während dessen bestimmungs gemäßen Betriebs, der zur Wandlung eines optischen Bildes in digitale Bilddaten ausgebildet ist, wobei die Vorrichtung
- eine Bildaufnahme-Steuereinrichtung (3) zur Steuerung des Bildwandlers (2),
- eine Bildverarbeitungseinrichtung (5) zur Verarbeitung der von dem Bildwandler (2) erzeugten digitalen Bilddaten und
- eine Bilddatenspeichereinrichtung (4) zur Speicherung von digitalen Bilddaten
umfasst,
**dadurch gekennzeichnet,**
**dass** die Bildverarbeitungseinrichtung (5) ausgebildet ist,
die in einem optischen Bild enthaltene Lichtmenge aus den zugehörigen digitalen Bilddaten zu ermitteln und die Bildaufnahme-Steuereinrichtung (3) dazu ausgebildet ist, die Einstellung des Bildwandlers (2) in eine Dunkelbildeinstellung zu ändern nur, wenn die von der Bildverarbeitungseinrichtung (5) ermittelte Lichtmenge kleiner oder gleich einem Schwellwert ist, wobei die Dunkelbildeinstellung -
unter Berücksichtigung der Kriterien: eines hohen Verstärkungsfaktors bei möglichst geringer Lichtempfindlichkeit des Bildsensors und einer Offset-Einstellung, die sicherstellt, dass sich alle Werte des Fixed Pattern Noise innerhalb eines Wertebereichs der möglichen digitalen Bilddaten befinden - so gewählt ist, dass die in dieser Einstellung mit dem Bildwandler (2) erzeugten Bilddaten im Falle einer homogenen Verteilung einer maximal dem Schwellwert entsprechenden Lichtmenge über der photosensitiven Bildfläche des Bildwandlers (2) keinen von der Lichtmenge bewirkten Anteil aufweisen, das mit der Dunkelbildeinstellung erzeugte Dunkelbild in der Bilddatenspeichereinrichtung (4) abzuspeichern und anschließend die Einstellung des Bildwandlers zurückzusetzen auf den Wert vor der Dunkelbildeinstellung.

7. Vorrichtung nach Anspruch 6,
**dadurch gekennzeichnet,**
**dass** Bildaufnahme-Steuereinrichtung (3), Bildverarbeitungseinrichtung (5) und Bilddatenspeichereinrichtung (4) zur Durchführung eines Verfahrens nach einem der Ansprüche 1 bis 5 ausgebildet sind.

8. Computerprogrammprodukt zur Bestimmung des Fixed Pattern Noise eines Bildwandlers (2), wobei das Computerprogrammprodukt eine Reihe physikalisch unterscheidbarer Zustände aufweist, die durch eine Datenverarbeitungseinrichtung lesbar und ausführbar sind und eine Abfolge von Instruktionen darstellen, die auf der Datenverarbeitungsanlage ausgeführt ein Verfahren nach einem der Ansprüche 1 bis 5 durchführen und auf der Datenverarbeitungsanlage eine Vorrichtung nach einem der Ansprüche 6 oder 7 einrichten.

## Claims

1. Method for recording dark images for determining the fixed pattern noise of an image converter (2) during its normal operation, having steps for
- converting (S1) an optical image (8) into digital image data using the image converter (2),
- determining (S2) the light level for the optical image (8) from the digital image data,
- comparing (S3) the light level determined for the optical image (8) with a threshold value,
- changing (S4) the settings for the image converter (2) to a dark image setting only if the determined light level equals or falls below the threshold value, whereby the dark image setting -
having regard to the following criteria: a high amplification factor at the lowest possible light sensitivity of the image sensor and a setting for the offset which ensures that all the values for the fixed pattern noise are situated within a value range for the possible digital image data -
is chosen such that the image data generated in this dark image setting in the case of a homogeneous distribution of a light level corresponding at most to the threshold value over the photosensitive imaging surface of the image converter (2) does not include any proportion produced by the light level, and
- recording (S5) a first dark image with the image converter (2) in the dark image setting and
- a subsequent resetting (S6) of the settings for the image converter (2) to the values prior to the dark image setting.

2. Method according to claim 1,
**characterised in that**
at least one further dark image analogous to the first dark image is recorded and the digital image data for the image elements of the first dark image is replaced by the digital image data for the image elements of the further dark image, if the latter has a lower value, corresponding to the respective image elements of the first dark image.

3. Method according to claim 2,
**characterised in that**
the subject of the optical image underlying the first dark image differs from the subject of the optical image underlying the at least further dark image.

4. Method according to claim 3,
**characterised in that**
the subject of the optical image underlying a first further dark image differs in each case from the subject of the optical image underlying a different further dark image.

5. Method according to one of the preceding claims,
**characterised in that**
the average value of the digital image data for the first dark image is determined and is subtracted from the digital image data for the first dark image.

6. Device for recording dark images for determining the fixed pattern noise of an image converter (2) during its normal operation, which is designed for converting an optical image into digital image data, whereby the device comprises
- an image capture control unit (3) for controlling the image converter (2),
- an image processing unit (5) for processing the digital image data generated by the image converter (2) and
- an image data storage unit (4) for storing digital image data,
**characterised in that**
the image processing unit (5) is designed to ascertain the light level contained in an optical image from the associated digital image data and the image capture control unit (3) is designed so as to change the setting of the image converter (2) into a dark image setting only if the light level ascertained by the image processing unit (5) is less than or equal to a threshold value, whereby the dark image setting - having regard to the following criteria: a high amplification factor at the lowest possible light sensitivity of the image sensor and a setting for the offset which ensures that all the values for the fixed pattern noise are situated within a value range for the possible digital image data -
is chosen such that the image data generated in this setting with the image converter (2) in the case of a homogeneous distribution of a light level corresponding at most to the threshold value over the photosensitive imaging surface of the image converter (2) does not include any proportion produced by the light level, to store the dark image generated with the dark image setting in the image data storage unit (4) and subsequently to reset the setting of the image converter to the value prior to the dark image setting.

7. Device according to claim 6,
**characterised in that**
image capture control unit (3), image processing unit (5) and image data storage unit (4) are designed for performing a method according to one of claims 1 to 5.

8. Computer program product for determining the fixed pattern noise of an image converter (2), whereby the computer program product has a series of physically distinguishable states which can be read and executed by a data processing unit and represent a sequence of instructions which when executed on the data processing system perform a method according to one of claims 1 to 5 and set up a device according to one of claims 6 or 7 on the data processing system.

## Revendications

1. Procédé d'enregistrement d'images sombres pour déterminer le bruit à motif fixe d'un convertisseur d'images (2) pendant son fonctionnement conforme, comprenant les étapes consistant à :
- convertir (S1) une image optique (8) en utilisant le convertisseur d'images (2) en données d'image numériques,
- déterminer (S2) la quantité de lumière de l'image optique (8) à partir des données d'image numériques,
- comparer (S3) la quantité de lumière déterminée de l'image optique (8) à une valeur de seuil,
- modifier (S4) les réglages du convertisseur d'images (2) sur un réglage d'image sombre uniquement si la quantité de lumière déterminée équivaut à la valeur de seuil lui est inférieure, dans lequel le réglage d'image sombre est choisi - en tenant compte des critères suivants : un facteur d'amplification élevé pour une sensibilité à la lumière si possible réduite du capteur d'image et un réglage de décalage, qui garantit que toutes les valeurs du bruit à motif fixe se trouvent à l'intérieur d'une plage de valeurs des données d'image numériques possibles-de telle sorte que les données d'image générées dans ce réglage d'image sombre ne présentent, dans le cas d'une distribution homogène d'une quantité de lumière correspondant au maximum à la valeur de seuil via la surface d'image photosensible du convertisseur d'images (2), aucune partie provoquée par la quantité de lumière,
- enregistrer (S5) une première image sombre avec le convertisseur d'images (2) dans le réglage d'image sombre, et
- ramener (S6) ensuite les réglages du convertisseur d'images (2) aux valeurs d'avant le réglage d'image sombre.

2. Procédé selon la revendication 1,
**caractérisé en ce que**
au moins une autre image sombre est enregistrée de manière analogue à la première image sombre et les données d'image numériques des éléments d'image de la première image sombre sont remplacées par les données d'image numériques des éléments d'image de l'autre image sombre correspondant aux éléments d'image respectifs de la première image sombre, lorsque ces derniers présentent une valeur plus faible.

3. Procédé selon la revendication 2,
**caractérisé en ce que**
le motif de l'image optique à la base de la première image sombre diffère du motif de l'image optique à la base de la au moins une autre image sombre.

4. Procédé selon la revendication 3,
**caractérisé en ce que**
le motif de l'image optique à la base d'une première autre image sombre diffère respectivement du motif de l'image optique à la base d'une autre image sombre suivante.

5. Procédé selon l'une quelconque des revendications précédentes,
**caractérisé en ce que**
la valeur moyenne des données d'image numériques de la première image sombre est déterminée et soustraite des données d'image numériques de la première image sombre.

6. Dispositif d'enregistrement d'images sombres pour déterminer les bruits à motif fixe d'un convertisseur d'images (2) pendant son fonctionnement conforme, qui est conçu pour convertir une image optique en données d'image numériques, dans lequel le dispositif comprend
- un dispositif de commande de prise d'image (3) pour commander le convertisseur d'images (2),
- un dispositif de traitement d'image (5) pour traiter les données d'image numériques générées par le convertisseur d'images (2), et
- un dispositif de mémorisation de données d'image (4) pour mémoriser des données d'image numériques,
**caractérisé en ce que**
le dispositif de traitement d'image (5) est conçu pour déterminer la quantité de lumière contenue dans une image optique à partir des données d'image numériques correspondantes et le dispositif de commande de prise d'image (3) est conçu pour modifier le réglage du convertisseur d'images (2) en réglage d'image sombre uniquement si la quantité de lumière déterminée par le dispositif de traitement d'image (5) est inférieure ou égale à une valeur de seuil,
dans lequel le réglage d'image sombre est choisi - en tenant compte des critères suivants : un facteur d'amplification élevé pour une sensibilité à la lumière si possible réduite du capteur d'image et un réglage de décalage, qui garantit que toutes les valeurs du bruit à motif fixe se trouvent à l'intérieur d'une plage de valeurs des données d'image numériques possibles - de telle sorte que les données d'image générées dans ce réglage par le convertisseur d'images (2) ne présentent, dans le cas d'une distribution homogène d'une quantité de lumière correspondant au maximum à la valeur de seuil, via la surface d'image photosensible du convertisseur d'images (2), aucune partie provoquée par la quantité de lumière, pour mémoriser, dans le dispositif de mémorisation de données d'image (4), l'image sombre générée avec le réglage d'image sombre et pour ramener ensuite le réglage du convertisseur d'images à la valeur d'avant le réglage d'image sombre.

7. Dispositif selon la revendication 6,
**caractérisé en ce que**
le dispositif de commande de prise d'image (3), le dispositif de traitement d'image (5) et le dispositif de mémorisation de données d'image (4) sont conçus pour mettre en oeuvre un procédé selon l'une quelconque des revendications 1 à 5.

8. Produit de programme informatique pour déterminer le bruit à motif fixe d'un convertisseur d'images (2), dans lequel le produit de programme informatique présente une série d'états physiquement différenciables, qui sont lisibles et exécutables par un dispositif de traitement de données et qui représentent un déroulement d'instructions qui, exécutées sur l'installation de traitement de données, mettent en oeuvre un procédé selon l'une quelconque des revendications 1 à 5 et aménagent sur l'installation de traitement de données un dispositif selon l'une quelconque des revendications 6 ou 7.
